# EUROPÄISCHE PATENTSCHRIFT

(11) **EP 1 267 270 B1**
(45) Veröffentlichungstag und Bekanntmachung des Hinweises auf die Patenterteilung: **31.12.2008**
(21) Anmeldenummer: 02000801.7
(22) Anmeldetag: 14.01.2002
(51) Int. Cl.: G06F 13/42, H04L 29/06

(54) **Verfahren zur Datenübertragung in einem Rechnersystem**
Method for data communication in a computer system
Méthode de communication de données dans un système d'ordinateur

(30) Priorität: 19.01.2001 DE 10102435
(43) Veröffentlichungstag der Anmeldung: 18.12.2002
(73) Patentinhaber: SIEMENS AKTIENGESELLSCHAFT, 80333 München (DE)
(72) Erfinder: Barthel, Herbert, 91074 Herzogenaurach (DE); Scheuerer, Roland, 92224 Amberg (DE); Schmauss, Wolfgang, 90607 Rueckersdorf (DE)

(56) Entgegenhaltungen:
- EP-A2- 0 443 103
- DE-A1- 19 917 576
- US-A- 5 625 892
- US-A1- 2006 133 281
- ANDREW TANENBAUM: "Computer Networks (Third Edition)" 1996, PRENTICE HALL INTERNATIONAL , NEW JERSEY , XP002419161 ISBN: 0-13-394248-1 * Seite 533 - Seite 545 *

## Beschreibung

Die Erfindung betrifft ein Verfahren zur Datenübertragung zwischen miteinander kommunizierenden Datenverarbeitungseinheiten in einem vernetzten System, z.B. in einem Computersystem.

Üblicherweise werden bei Computersystemen Kommunikationsverbindungen unterschieden in sicherheitsrelevante, z.B. für fehlersichere Steuerungen, und nicht sicherheitsrelevante, z.B. für manuelle Anwenderbedienungen, Kommunikationsverbindungen. Allgemeines Ziel von sicherheitsrelevanten Kommunikationsverbindungen in so genannten "sicheren Computersystemen" oder so genannten "Failsafe"-Systemen ist, dass Daten oder Signale aktuell in Echtzeit und nicht verfälscht bearbeitet und ausgetauscht werden. Dabei wird bei der Kommunikation insbesondere auf ein rechtzeitiges Eintreffen der Daten sowie auf eine richtige Datenreihenfolge geachtet. Dies wird beispielsweise dadurch sichergestellt, dass im Falle einer Datenübertragung oder -kommunikation ein eintreffendes Signal durch Rücksendung einer so genannten "Quittung" an den Sender des Signals bestätigt wird.

Von besonderer Bedeutung bei derartigen sicheren Computersystemen ist darüber hinaus die Laufzeitüberwachung beim Austausch von Daten. Dies wird durch Zurücksenden der Quittung erzielt, wobei die Laufzeit anhand der Zeitdifferenz zwischen Absenden des ursprünglichen Signals und dem Empfang der Quittung für dieses Signal ermittelt wird.

Zur Überprüfung, ob bei der Datenübertragung möglicherweise ein Fehler aufgetreten ist, wird einem Datenpaket üblicherweise eine Prüfsumme zugeordnet und mit diesem übertragen. Dabei kann es sich beispielsweise um ein so genanntes CRC ("Cyclic Redundancy Check") handeln, auch Prüfsignal genannt, das durch einen Verschlüsselungscode auf Basis eines Polynoms erzeugt wurde.

Bedingt durch die zunehmende Komplexität sicherer Computersysteme sowie mit zunehmender Steigerung ihrer Sicherheitsstandards kommt es durch den Austausch von Signalen und diese bestätigenden Quittungen zu einem erheblichen Zuwachs an erforderlichen Datenübertragungen. Insbesondere bei sicherheitsrelevanten Kommunikationsverbindungen, bei denen maximale Reaktionszeiten von kleiner 200 ms einzuhalten sind, kommt es zu einer derart hohen Kommunikationslast, die je nach Ausführung der Datenverarbeitungseinheiten zu einer Überschreitung der Laufzeit und damit zu einem Abschalten der empfangenden Datenverarbeitungseinheit führt. Das wiederum führt in einem komplexen Computernetz zu einer drastischen Einschränkung der Verfügbarkeit.

Der Erfindung liegt daher die Aufgabe zugrunde, ein Verfahren zur Datenübertragung zwischen miteinander kommunizierenden Datenverarbeitungseinheiten in einem vernetzten System anzugeben, bei dem die Kommunikationslast zwischen den Datenverarbeitungseinheiten besonders gering gehalten ist.

Das Buch "Computer Networks (Third Edition)" - ANDREW TANENBAUM: 1996, PRENTICE HALL INTERNATIONAL (Seite 195-198) offenbart ein System zur Datenübertragung zwischen miteinander kommunizierenden Datenverarbeitungseinheiten, wobei ein Signal und ein Quittungssignal benutzt werden. Eine Verzögerung wird auf der Empfangsseite eingeführt um ein passendes Packet zu finden mit dem das Quittungssignalmitgeführt werden kann.

Diese Aufgabe wird erfindungsgemäß gelöst durch ein Verfahren zur Datenübertragung zwischen miteinander kommunizierenden Datenverarbeitungseinheiten, wobei eine Mehrzahl von Signalen derart von einer der Datenverarbeitungseinheiten zeitfolgerichtig gesendet und von einer weiteren Datenverarbeitungseinheit empfangen wird, dass erst nach Ablauf einer vorgebbaren Mindestzeit für die Datenübertragung eines gesendeten Signals und nach Empfangen eines Quittungssignals von der empfangenden Datenverarbeitungseinheit für dieses Signal in der sendenden Datenverarbeitungseinheit ein zeitlich nachfolgendes Signal gesendet wird.

Durch eine derartige, unterschiedliche Zeitbereiche berücksichtigende Kombination von Mindestzeit und Quittungssignal als Kriterium für das Absenden des zeitlich nachfolgenden Signals (=Folgesignal) kann dieses Absenden so lange wie möglich oder unter den gegebenen Betriebsbedingungen vertretbar hinausgezögert werden. Dadurch wiederum wird die Kommunikationslast, die durch Anzahl der ausgetauschten Daten pro Zeiteinheit bestimmt ist, besonders gering gehalten. Die Einbindung der Mindestzeit als Kriterium ermöglicht insbesondere, dass wiederholt oder periodisch gesendete (beispielsweise upgedatete) Signale oder Informationen erst zum spätest möglichen Zeitpunkt gesendet werden. In diesem Fall erfolgt ein Senden von Daten ohne Abwarten einer Mindestzeit lediglich dann, wenn die Signale upgedatet werden.

Die Erfindung geht dabei von der Überlegung aus, dass sich die Datenübertragung aus fortlaufenden und zeitfolgerichtig zu übertragenden Signalen verschiedener Signaltypen zusammensetzt. Zur Prüfung einer sicheren Datenübertragung sind dabei verschiedene die Kommunikationslast des Gesamtsystem beeinflussende Faktoren, wie z.B. der Austausch von Quittungssignalen zwischen den Datenverarbeitungseinheiten, zu berücksichtigen. Für die Auslösung einer einzelnen Datenübertragung kann dabei ein einziges Signal ausreichend sein, wobei sämtliche weitere die diese Datenübertragung betreffenden Signale redundante Informationen zur vorangegangenen Datenübertragung, zum so genannten Vorgängerzyklus, enthalten. Anstelle des üblicherweise vorgesehenen Auslösekriteriums für das Aussenden des Folgesignals - das Abwarten des Eintreffens des Quittungssignals für das gesendete Signal - wird als Auslösekriterium zusätzlich die Mindestzeit für das vorangegangene Signal überwacht. Durch das Absenden des Folgesignals oder "upgedateten" Signals (Absenden des Signals n+1) erst nach Eintritt von verknüpften Bedingungen mit unterschiedlicher Zeitdauer: - Quittung für den Erhalt des Signals n beim Empfänger muß beim Sender eingegangen sein, und - eine Mindestzeit seit dem Absenden des Signals n an den Empfänger muß verstrichen sein, ist gewährleistet, dass das Folgesignal erst mit Ablauf der letzten Zeitdauer und somit zum spät möglichsten Zeitpunkt abgesendet wird. Hierdurch ist die Kommunikationslast auf besonders einfache Weise reduziert.

Vorzugsweise wird die Mindestzeit des Signals anhand von dessen Signaltyp bestimmt. Die Mindestzeit wird dabei bestimmt durch eine Überwachungszeit, vermindert um die tatsächliche Laufzeit des Signals. Die Überwachungszeit ist eine charakteristische Zeit, die beispielsweise von der zugrundeliegenden Anwendung des Signals und somit durch dessen Signaltyp vorgegeben ist. Bei der Festlegung der Überwachungszeit spielt somit die Eigenschaft des zu überwachenden Betriebsparameters eine Rolle. Die Eigenschaften des zu überwachenden Betriebsparameters oder sicherheitsgerichteten Signals, das zwischen den Datenverarbeitungseinheiten besonders schnell ausgetauscht wird (üblicherweise alle 10 bis 500 ms), charakterisieren Zustandsdaten, die sich beispielsweise entgegen den Sicherheitsanforderungen selten ändern (etwa minütlich bis monatlich), wie z.B. Füllstandswächter, Schutztüren, Drucksensoren oder Temperatursensoren. Eine derartige signaltypabhängige Vorgabe der Mindestzeit ist beispielsweise besonders geeignet für eine so genannte "Stop-Kategorie 1" nach EN 60204-1 "gesteuertes Stillsetzen; Energiezufuhr wird erst dann unterbrochen, wenn Stillstand erreicht ist." Dabei wird die anwendungsspezifische Zweiteilung in eine sofortige Reaktion (Stillsetzen) und spätere Reaktion (späteres Abschalten der Energiezufuhr) genutzt.

Zweckmäßigerweise werden Signale gleichen Signaltyps zusammengefaßt, für die eine zugehörige Mindestzeit bestimmt wird. Beispielsweise umfaßt eine einzelne Datenübertragung mehrere derartig verschiedene Signale oder ein einzelnes hochpriores Signal. Darüber hinaus werden die Signale kontinuierlich oder zyklisch übertragen. Hierdurch ist es möglich, eine Anzahl N von Signalen mittels einer gemeinsamen Mindestzeit auf eine sichere Datenübertragung zu überwachen. Darüber hinaus können diese den gleichen Signaltyp und demzufolge die gleich Mindestzeit aufweisenden Signale in eine einzelne Datenübertragung zusammengefaßt werden, wodurch die Anzahl der Datenübertragungen und daraus resultierend die Anzahl der erforderlichen Quittungstelegramme reduziert ist.

Alternativ oder zusätzlich werden vorteilhafterweise Signale mit gleichem logischen Kanal ermittelt, für die eine zugehörige Mindestzeit bestimmt wird. Durch eine derartige Gruppierung der Signale mit gleichem logischen Kanal (nicht hardwaremäßig) und Überwachung der Datenübertragung mittels einer zugehörigen Mindestzeit ist die Kommunikationslast gegenüber herkömmlichen Datenübertragungen reduziert.

Bevorzugt wird die Mindestzeit für mehrere Signale anhand der kleinsten von N zu berücksichtigenden Mindestzeiten gebildet. Beispielsweise wird von den zu berücksichtigenden N Reaktionszeiten für den logischen Kanal die kleinste Mindestzeit oder Reaktionszeit gewählt. Hierdurch ist gewährleistet, dass die an sichere Computersysteme gestellten Mindestanforderungen bezüglich einer sicheren Datenübertragung innerhalb betreffender Zykluszeiten erfüllt sind.

Zusätzlich werden bei der Bestimmung der Mindestzeit vorzugsweise Betriebsparameter der Datenverarbeitungseinheiten und/oder zugehöriger Übertragungseinheiten berücksichtigt. Hierbei handelt es sich beispielsweise um charakteristische Prozesszeiten, die für die Verarbeitung eintreffender Daten oder Signale benötigt werden. Ebenso kann eine Taktung von sendenden oder empfangenden Datenverarbeitungseinheiten, wie auch Eigenschaften der Datenübertragungseinheiten bei der Bestimmung der Mindestzeit berücksichtigt werden.

Bevorzugt wird das zeitlich nachfolgende Signal bei Änderung eines vorgebbaren Prozesszustands gesendet. Diese Ausgestaltung ermöglicht somit bei der durch dieses Verfahren bedingten geringen Kommunikationslast eine besonders schnelle Reaktion im Falle einer Änderung eines, beispielsweise als besonders sicherheitsrelevant oder kritisch erkannten, Signals oder Datums.

Vorzugsweise wird für mehrere Signale die Änderung deren Prozesszustände anhand einer zugehörigen Prüfsumme bestimmt. Diese Prüfsumme ist für eine fehlersichere Datenübertragung ohnehin zu ermitteln und steht somit zur Verfügung. Durch die Verwendung der Prüfsumme auch zur Bestimmung der Änderung der Prozesszustände ist gewährleistet, dass zur Feststellung, ob eine Änderung eines Datums erfolgt, nicht jedes einzelne Datum kontinuierlich oder zyklisch überprüft wird. Vielmehr wird kontinuierlich geprüft, ob sich eine mehrere Signale charakterisierende Prüfsumme (= CRC) geändert hat. In diesem Fall ist zwar keine eindeutige Zuordnung möglich, welches einzelne Datum sich geändert hat, andererseits ist aber nur eine einzige Prüfung in kontinuierlichem Rhythmus erforderlich, wodurch ergänzend die Kommunikationslast reduziert wird.

Vorteilhaft wird der Prozesszustand kontinuierlich oder zyklisch überprüft. Die Bestimmung der Art der Überwachung des Prozesszustands und deren Berücksichtigung bei der Datenübertragung des Signals trägt ebenfalls zu einer Reduzierung der Kommunikationslast bei. Beispielsweise wird durch einen dem Signaltyp angepassten Datenübertragungszyklus und durch eine derartige Differenzierung der Signale die Anzahl der Datenübertragungen ergänzend reduziert.

Die mit der Erfindung erzielten Vorteile bestehen insbesondere darin, dass durch eine Kombination von Überwachung der Mindestzeit des vorangegangenen Sendesignals und Eingang des Quittungssignals für dieses Sendesignal von der empfangenen Datenverarbeitungseinheit als Kriterium für das Aussenden des nächsten Signals dieses zum spätest möglichen Zeitpunkt gesendet wird. Dadurch wird die Kommunikationslast zwischen den Datenverarbeitungseinheiten erheblich reduziert. Hierdurch ist die Verfügbarkeit der einzelnen Datenverarbeitungseinheiten in einem sicheren Netz weitgehend erhöht. Darüber hinaus wird durch die Berücksichtigung von Eigenschaften des Signals bezüglich der Bestimmung der Mindestzeit die Reaktionszeit, d.h. die Aktualisierung von Signalen, hinsichtlich geforderter Sicherheitsbestimmungen verbessert. Somit führt die Reduzierung der Kommunikationslast gleichzeitig zu einer Verbesserung der Reaktionszeit sicherheitsgerichteter Kommunikationsverbindungen.

Ausführungsbeispiele der Erfindung werden anhand einer Zeichnung näher erläutert.

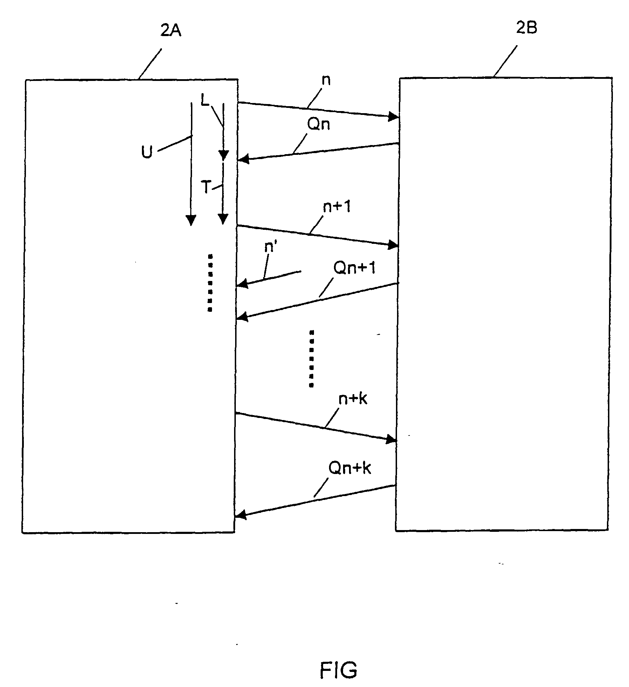

Die Figur zeigt zwei miteinander kommunizierende Datenverarbeitungseinheiten 2A und 2B, die in ein nicht näher dargestelltes Computersystem eingebunden sind. Die in der Figur dargestellten Datenverarbeitungseinheiten 2A, 2B können beispielsweise Personalcomputer in einem vernetzten Computersystem oder mehrere CPUs eines einzelnen Computersystems sein, die miteinander Daten austauschen. Die Datenverarbeitungseinheiten 2A, 2B können zueinander redundant sein. Sie können alternativ durch ein zu ihnen redundant ausgebildetes System abgesichert sein oder selbst aus redundanten CPUs aufgebaut sein.

Zwischen den beiden Datenverarbeitungseinheiten 2A, 2B wird eine Mehrzahl von Signalen n bis n+k (k=natürliche Zahl) als Daten zeitfolgerichtig ausgetauscht. Die in der Figur dargestellten Pfeile symbolisieren dabei jeweils die Senderichtung der zugehörigen Kommunikationsverbindungen und geben somit den jeweiligen Status der Datenverarbeitungseinheit 2A, 2B für diese Kommunikationsverbindungen - Sender oder Empfänger - an.

Die Kommunikationsverbindungen und die aus der Anzahl derer resultierende Kommunikationslast ist grundsätzlich in logischer Hinsicht zu sehen. D.h. es handelt sich somit nicht um hardwaretechnische, sondern vielmehr um telegrammtechnische Auslegung der Kommunikationsverbindungen zwischen den Datenverarbeitungseinheiten 2A und 2B. Dementsprechend kann das vorliegende System als Zweibussystem oder auch als Einbussystem mit redundanter Übertragung ausgebildet sein.

Bei einem Sendestatus der Datenverarbeitungseinheit 2A wird das Signal n an die Datenverarbeitungseinheit 2B gesendet. Das zeitlich folgende Signal n+1 wird erst nach Vorliegen folgender Bedingungen zeitfolgerichtig nach dem Signal n von der Datenverarbeitungseinheit 2A an die Datenverarbeitungseinheit 2B gesendet:
- nach Ablauf einer vorgebbaren Mindestzeit T für die Datenübertragung des vorangegangenen Signals n, und
- nach Empfang eines Quittungssignals Qn von der Datenverarbeitungseinheit 2B für das vorangegangene Signal n durch die Datenverarbeitungseinheit 2A.

Mit anderen Worten: Das Absenden des Signals n+1 (=Folgesignal), z.B. einem aktualisierten oder "upgedateten" Signals, erfolgt erst, nachdem das Quittungssignal Qn für den Erhalt des Signals n beim Empfänger (Datenverarbeitungseinheit 2B) beim Sender (Datenverarbeitungseinheit 2A) eingegangen ist und eine Mindestzeit T seit dem Absenden des Signals n an den Empfänger verstrichen ist.

Die Mindestzeit T wird dabei bevorzugt bestimmt durch eine Überwachungszeit U für das Signal n, welche um die Laufzeit L des Signals n reduziert wird. Die Überwachungszeit U wird dabei anhand des Signaltyps des Signals n bestimmt. Die Überwachungszeit U charakterisiert beispielsweise eine dem Signal n zugrundeliegende Anwendung, die zur zyklischen Aktualisierung des Signals n verwendet wird. Zyklische Kommunikation bedeutet im allgemeinen, dass ein ständiger Datenaustausch vorgenommen wird, auch wenn sich einzelne Daten nicht ändern. Dies ist insbesondere von Bedeutung, wenn jederzeit Sicherheit über die Aktualität der vorliegenden Daten vorliegen soll.

Bei einer Kommunikationsverbindung zwischen den beiden Datenverarbeitungseinheiten 2A und 2B wird beispielsweise zur Überwachung eines Temperaturgebers das betreffende Signal n aufgrund von prozesstechnischen Eigenschaften alle 500 ms auf eine Zustandsänderung überwacht. Dazu wird bei Aussenden des Signals n die Überwachungszeit U im Sender, d.h. in der Datenverarbeitungseinheit 2A, gestartet. Das von der Datenverarbeitungseinheit 2B gesendete Quittungssignal Qn für den Erhalt des Signals n wird von der Datenverarbeitungseinheit 2A empfangen. Anhand des empfangenen Quittungssignals Qn wird die Laufzeit L des Signals n für die Datenübertragung ermittelt. Der nächste Wert zur Aktualisierung für den Temperaturgeber wird als Signal n+1 erst nach Ablauf der Mindestzeit T (= Differenz aus Überwachungszeit U und Laufzeit L) gesendet. Somit erfolgt die Aktualisierung erst mit Ablauf des zuletzt anstehenden Kriteriums stets zum letztmöglichen Zeitpunkt, wodurch die Kommunikationslast erheblich reduziert ist.

Für eine weitere Reduzierung der Kommunikationslast und in Abhängigkeit von der Art und Anwendung des Computersystems werden bevorzugt Signale n gleichen Signaltyps zusammengefasst und beispielsweise gemeinsam übertragen, wobei für diese Signale n eine gemeinsame zugehörige Mindestzeit T bestimmt wird. Alternativ oder zusätzlich wird für die Signale n, die über einen gleichen logischen Kanal übermittelt werden, eine gemeinsame Mindestzeit T bestimmt. Alternativ oder zusätzlich wird die Mindestzeit T für mehrere Signale n anhand der kleinsten von N zu berücksichtigenden Mindestzeiten T gebildet. Hierdurch ist die Einhaltung von Sicherheitsforderungen gewährleistet.

Darüber hinaus kann die so genannte Standard-Reaktionszeit für die Absendung des Signals n+1 verkürzt werden, indem zur sofortigen Information des Empfängers zusätzlich das Folgesignal n+1 gesendet wird, wenn sich das zugrundeliegende Datum ändert. Bei dieser Ausgestaltung lautet das Kriterium für die Absendung des Signals n+1 somit: (Quittung für das Signal n ist beim Sender eingetroffen UND die Mindestzeit T ist abgelaufen) ODER eine Veränderung des Datums ist eingetreten.

Alternativ wird beispielsweise ein den Betriebsparameter charakterisierendes Signal n an den Empfänger geschickt und das Eintreffen des Quittungssignals Qn abgewartet, mit der der Eingang des Signals n beim Empfänger bestätigt wird. Nach Eintreffen der Quittung wird sodann ein den aktualisierten Betriebsparameter kennzeichnendes Signal n+1 an den Empfänger übermittelt. Mit anderen Worten: die Absendung des aktualisierten Signals n+1 wird ausgelöst durch das Eintreffen der Quittung Qn für das "Vorgänger" - Signal n. Hierbei wird die Mindestzeit T nicht überwacht.

Ferner können beispielsweise bei einer zweiseitig gerichteten Kommunikation ("hin und her"- Übertragung), bei der auch im Empfänger eine Zeitüberwachung vorhanden ist, die sicherheitsgerichteten Datensignale n+1 gleichzeitig als Quittung für das vorangegangene Signal n in Gegenrichtung verwendet werden.

Somit ist keine spezielle Übermittlung einer separaten Quittung erforderlich, wodurch die Kommunikationslast zusätzlich reduziert wird.

Eine weitere Anwendung, für die das Computersystem auszubilden ist, umfasst eine Anzahl N charakteristischer Parameter oder Gruppen von Parametern, die über den selben logischen (nicht hardwaremäßigen) Kanal übermittelt werden. Hierbei wird die Überwachungszeit folgendermaßen ermittelt:
- jedem Parameter oder Gruppe von Parametern ist (beispielsweise in Form einer Tabelle) eine Reaktionszeit zugeordnet,
- von den dementsprechend zu berücksichtigenden N Reaktionszeiten wird für den logischen Kanal die kleinste gewählt.
Hierdurch sind sämtliche Sicherheitsanforderungen erfüllt.

Abhängig von der Anwendung werden weitere Kriterien, wie z.B. die aktuelle Kommunikationslast, Anzahl der Datenverarbeitungseinheiten 2A, 2B, bei der Wahl einer geeigneten Mindestzeit T berücksichtigt werden. Dabei kann beispielsweise eine charakteristische Prozesszeit berücksichtigt werden, die für die Verarbeitung eintreffender Daten benötigt wird. Ebenso kann die Berücksichtigung einer Taktung von Sender oder Empfänger bzw. die Berücksichtigung von Eigenschaften der Datenübertragungseinheiten erforderlich sein.

Ferner ermöglicht die oben beschriebene Kombination von Quittungssignal Qn und Mindestzeit T eine vereinfachte Handhabung des so genannten "händischen Quittierens", das insbesondere dann erforderlich ist, wenn nach Behebung einer Störung wieder in den kontinuierlichen, automatisierten Zustand überzugehen ist. Beim Übergang zum kontinuierlichen, automatisierten Zustand wird üblicherweise für einen Anstoß des automatisierten Systemablaufs eine händisch oder manuell eingegebene Quittung an den Kommunikationspartner übermittelt. Bei einer zweiseitigen Kommunikation kann eine derartige händische Quittierung in Rückwärtsrichtung entfallen, wenn der zu behebende Störfall die gemeinsame Verbindungsleitung betraf. In diesem Fall kann durch die Übermittlung eines Anfangssignals n der Kanal wieder in Betrieb genommen werden. Die Übermittlung eines Signals n' in Gegenrichtung, die mit der automatisierten Quittierung des ersten Signals n einhergeht, vollendet dabei den Zyklus, wobei eine händische Quittierung in Rückwärtsrichtung nicht erforderlich ist.

## Patentansprüche

1. Verfahren zur Datenübertragung zwischen miteinander kommunizierenden Datenverarbeitungseinheiten (2A, 2B), wobei eine Mehrzahl von Signalen (n, n+1 bis n+k) derart von einer der Datenverarbeitungseinheiten (2A) zeitfolgerichtig gesendet und von einer weiteren Datenverarbeitungseinheit (2B) empfangen wird, dass nach Ablauf einer vorgebbaren Mindestzeit (T) für die Datenübertragung eines Signals (n) und nach Empfangen eines Quittungssignals (Qn) der empfangenden Datenverarbeitungseinheit (2B) für dieses Signal (n) in der sendenden Datenverarbeitungseinheit (2A) ein zeitlich nachfolgendes Signal (n+1) gesendet wird.

2. Verfahren nach Anspruch 1, bei dem die Mindestzeit (T) des Signals (n) anhand dessen Signaltyps bestimmt wird.

3. Verfahren nach Anspruch 1, bei dem Signale (n bis n+k) gleichen Signaltyps zusammengefasst werden, für die eine zugehörige Mindestzeit (T) bestimmt wird.

4. Verfahren nach Anspruch 1, bei dem Signale (n bis n+k) mit gleichem logischen Kanal ermittelt werden, für die eine zugehörige Mindestzeit (T) bestimmt wird.

5. Verfahren nach einem der Ansprüche 1 bis 4, bei dem die Mindestzeit (T) für mehrere Signale (n bis n+k) anhand der kleinsten von N zu berücksichtigenden Mindestzeiten (T) gebildet wird.

6. Verfahren nach einem der Ansprüche 1 bis 5, bei dem bei der Bestimmung der Mindestzeit (T) Betriebsparameter der Datenverarbeitungseinheiten (2A, 2B) und/oder zugehöriger Übertragungseinheiten berücksichtigt werden.

7. Verfahren nach einem der Ansprüche 1 bis 6, bei dem das zeitlich nachfolgende Signal (n+1) bei Änderung eines vorgebbaren Prozesszustands gesendet wird.

8. Verfahren nach Anspruch 7, bei dem für mehrere Signale (n bis n+k) die Änderung deren Prozesszustände anhand einer der Änderung der Prozesszustände zugeordneten Prüfsumme bestimmt wird.

9. Verfahren nach Anspruch 7 oder 8, bei dem der Prozesszustand kontinuierlich oder zyklisch überprüft wird.

## Claims

1. Method for data transmission between data processing units (2A, 2B) which communicate with one another, with a plurality of signals (n, n+1, to n+k) being sent chronologically by one of the data processing units (2A) and being received by a further data processing unit (2B) such that after a preset minimum time (T) has elapsed for the data transfer of a signal (n) and after receipt of an acknowledgment signal (Qn) from the receiving data processing unit (2B) for this signal in the transmitting data processing unit (2A), a subsequent signal (n+1) is sent.

2. Method according to claim 1, in which the minimum time (T) of the signal (n) is determined on the basis of its signal type.

3. Method according to claim 1, in which signals (n to n+k) of the same signal type are combined, for which an associated minimum time (T) is determined.

4. Method according to claim 1, in which signals (n to n+k) with the same logical channel are determined, for which an associated minimum time (T) is determined.

5. Method according to one of claims 1 to 4, in which the minimum time (T) for several signals (n to n+k) is formed on the basis of the smallest minimum times (T) to be considered by N.

6. Method according to one of claims 1 to 5, in which, when determining the minimum time (T), operating parameters of the data processing units (2A, 2B) and/or associated transmission units are considered.

7. Method according to one of the claims 1 to 6, in which the subsequent signal (n+1) is sent when a preset process status is changed.

8. Method according to claim 7, in which for several signals (n to n+k), the change in the process statuses thereof is determined on the basis of a checksum assigned to the change in process statuses.

9. Method according to claim 7 or 8, in which the process status is continually or cyclically monitored.

## Revendications

1. Procédé de transmission de données entre des unités ( 2A, 2B ) informatiques communiquant entre elles, une multiplicité de signaux ( n, n+1 à n+k ) étant envoyée d'une manière correcte en succession dans le temps dans l'une des unités ( 2A ) informatiques et étant reçue par une autre unité ( 2B ) informatique de manière à ce que, après expiration d'une durée ( T ) minimum pouvant être prescrite pour la transmission de données d'un signal ( n ) et après réception d'un signal ( Qn ) d'accusé de réception de l'unité ( 2B ) informatique réceptrice, il est émis pour ce signal ( n ) dans l'unité ( 2A ) informatique émettrice un signal ( n+1 ) venant ensuite dans le temps.

2. Procédé suivant la revendication 1, dans lequel on détermine la durée ( T ) minimum du signal ( n ) au moyen du type de signal.

3. Procédé suivant la revendication 1, dans lequel on rassemble des signaux ( n à n+k ) du même type de signal, pour lesquels on détermine une durée ( T ) minimum associée.

4. Procédé suivant la revendication 1, dans lequel on détermine des signaux ( n à n+k ) ayant un même canal logique, pour lesquels on détermine une durée ( T ) minimum associée.

5. Procédé suivant l'une des revendications 1 à 4, dans lequel on forme la durée ( T ) minimum pour plusieurs signaux ( n à n+k ) au moyen de la plus petite de N durées ( T ) minimum à prendre en compte.

6. Procédé suivant l'une des revendications 1 à 5, dans lequel, dans la détermination de la durée ( T ) minimum, on prend en compte des paramètres de fonctionnement des unités ( 2A, 2B ) informatiques et/ou des unités de transmission en faisant partie.

7. Procédé suivant l'une des revendications 1 à 6, dans lequel on envoie le signal ( n+1) venant ensuite dans le temps s'il y a une modification d'un état du processus pouvant être prescrit.

8. Procédé suivant la revendication 7, dans lequel on détermine pour plusieurs signaux ( n à n+k ) la variation de leur état de processus au moyen d'une somme de contrôle associée à la variation des états de processus.

9. Procédé suivant la revendication 7 ou 8, dans lequel on contrôle l'état de processus en continu ou cycliquement.
